(19) Europäisches Patentamt

European Patent Office

Office européen des brevets

(11) Publication number: **0 422 881 B1**

# EUROPEAN PATENT SPECIFICATION

(45) Date of publication of patent specification: **14.12.94**  (51) Int. Cl.⁵: **B60C 9/20**

(21) Application number: **90311025.2**

(22) Date of filing: **09.10.90**

(54) **A tyre for motorcycles.**

(30) Priority: **13.10.89 JP 267239/89**

(43) Date of publication of application:
**17.04.91 Bulletin 91/16**

(45) Publication of the grant of the patent:
**14.12.94 Bulletin 94/50**

(84) Designated Contracting States:
**DE FR IT**

(56) References cited:
**FR-A- 1 182 274**
**FR-A- 2 429 678**
**GB-A- 2 015 937**
**GB-A- 2 092 964**

**PATENT ABSTRACTS OF JAPAN vol. 10, no. 246 (M-510)(2302) 23 August 1986, & Jp-A-61 75002**

(73) Proprietor: **SUMITOMO RUBBER INDUSTRIES LIMITED**
**1-1 Tsutsuicho 1-chome**
**Chuo-ku**
**Kobe-shi Hyogo-ken (JP)**

(72) Inventor: **Nakasaki, Eiji**
**629 Kimura,**
**Kakogawa-cho**
**Kakogawa-shi, Hyogo-ken (JP)**

(74) Representative: **Stewart, Charles Geoffrey et al**
**SP TYRES UK LIMITED**
**Tyre Technical Division**
**Fort Dunlop, Erdington, Birmingham B24 9OT (GB)**

EP 0 422 881 B1

## Description

The present invention relates to a tyre for motor cycles, in which the high speed durability is improved by controlling the growth in outer diameter of the tyre during high speed running so as to reduce heat generation.

Recently, the technical development of motor cycles has been remarkable and now maximum speeds more than 300 km/h are known, accordingly tyres for such motor cycles are required to have increased high speed durability.

Heretofore, in order to increase high speed performance, have been given increased rigidity in the tread region by crossing the cords of the carcass and the belt layer in the same way as tyres for 4 wheel vehicles. Such tyres also can have a spiral band layer made of nylon cords wound radially outwardly of the belt layer. However, such tyres as previously described increase the tyre weight, so that there are problems in that the tread region is subjected to heat generation under high speed running.

On the other hand, in order to solve such problems, a tyre with a belt ply made by a belt cord winding spirally around a carcass has been suggested. But such a belt construction is liable to be insufficient in breaking strength in the centre region of the tread so that resistance to shock is reduced, while in the shoulder region, it is necessary to further increase the resistance to compressive fatigue in relation to the bank angle. Therefore, the aforesaid problems have not been completely resolved.

A known tyre according to the preamble of claim 1 is shown, e.g. in FR-A-2 429 678.

It is an object of the present invention to provide a tyre for motor cycles which has improved high speed durability by restraining the growth in the outer diameter of the tyre during high speed running to reduce heat generation in the tread region.

Accordingly the invention provides a tyre for motor cycles comprising a carcass composed of at least one carcass ply extending from a tread through sidewalls and folded at each edge around a bead core of a bead region and a belt layer composed of at least one belt ply arranged radially outside the carcass the carcass ply containing carcass cords of aromatic polyamide fibre laid at an angle of 60° to 90° with respect to the equator of the tyre, and the belt ply comprising belt cords of aromatic polyamide fibre spirally wound substantially parallel to the equator of the tyre, characterised in that the belt layer has in its central region which is positioned between border points (P) each spaced apart in the axial direction by a distance of 0.25 times to 0.35 times the tread width from the equator which belt cords having an initial modulus of elasticity larger than that of the belt cords in the shoulder regions which are positioned axially outside said border points (P), and the belt cord in the central region has a twist number of 30x30T/10cm to 35x35T/10cm and the belt cord in the shoulder region has a twist number of 35x35T/10cm to 40x40T/10cm.

As the carcass ply and the belt ply are formed by cords made of aromatic polyamide fibre, the strengths of the carcass and the belt layer are larger than those made of nylon or polyester fibre cords. Also the spirally wound belt cords are parallel to the equator of the tyre and this prevents the growth of the outer diameter of the tyre during high speed running.

Further the belt cords in the central region are set to be larger in initial modulus of elasticity than those in the shoulder regions so that the breaking strength in the central region is increased so as to improve the resistance to shock, while in the shoulder regions, resistance to compressive fatigues becomes large, therefore, the aforesaid growth in the outer diameter of the tyre is further restrained so as to prevent heat generation in the tread region, thereby high speed durability of the tyre is increased.

An embodiment of the present invention will now be described by way of example, referring to the attached drawings, in which:

Fig.1. is a sectional view showing one embodiment of the present invention.

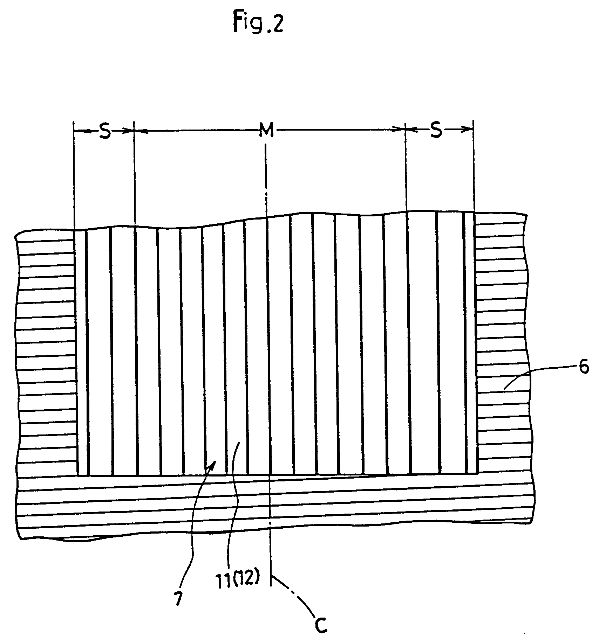

Fig.2 is a plan view showing the arrangement of belt cords and carcass cords.

Fig. 3. is a graph showing each relation between the twist number of cords and fatigue life and breaking strength.

In the Figures, a tyre 1 for a motor cycle has a pair of bead regions 3 each containing a bead core, a pair of sidewalls 4 extending radially outwardly from each bead region 3 and a tread connected between the outer edges of the sidewalls 4. The tyre 1 is reinforced by a carcass 6 extending from the tread 5 through the sidewalls 4 to the bead regions 3 and wrapped around the bead cores 2 at each edge thereof, and a belt layer 7 arranged radially outside the carcass.

The carcass 6 according to the present embodiment comprises one carcass ply of carcass cords which cords are made by twisting two yarns each having 1500 denier of aromatic polyamide fibre and laid at an angle ranging from 60 degrees to 90 degrees with respect to the equator of the tyre, which is a radial or a semiradial construction.

The belt layer 7 consists of two belt plies arranged radially outside the carcass 6. The belt ply 11 adjacent to the carcass 6 is referred to as the first belt ply 11 and the succeeding one as the second belt ply 12. The first belt ply 11 is formed by spirally winding a belt cord made of aromatic polyamide fibre substantially parallel to the equator C of the tyre.

The second belt ply 12 is substantially the same width as the first belt ply 11, and is formed by a belt cord made of the same aromatic polyamide fibre as the first belt ply cord again it is spirally wound but in the reverse direction of rotation to the first belt ply cord and substantially parallel to the equator C of the tyre.

Each belt cord of the first and second belt plies 11 and 12 has a twist number of the cord (defined as the number of twist turns per unit length) axially inside a border point (P) is different from the twist number of the cord axially outside the border point (P)

The aforesaid border point (P) is a point on the belt layer 7, which is spaced apart from the equator C by a distance of 0.25 to 0.35 times the tread width TW which is the axial length between both the tread outer edges E.

The border points P divide the belt layer 7 into the central region M defined between the border points P and shoulder regions S outside of the border points P.

The belt cords of the central region M and the shoulder regions S in the present embodiment are formed by twisting two yarns made of 1500 denier aromatic polyamide fibres. The twist number CT of the cord in the central region M is set at 30 to 35, and the twist number CT in the shoulder regions S is set at 35 to 40.

When the twist number CT of belt cord becomes larger, the initial modulus of elasticity of the cord becomes smaller and to the contrary, when the twist number CT becomes smaller, the initial modulus of elasticity becomes larger.

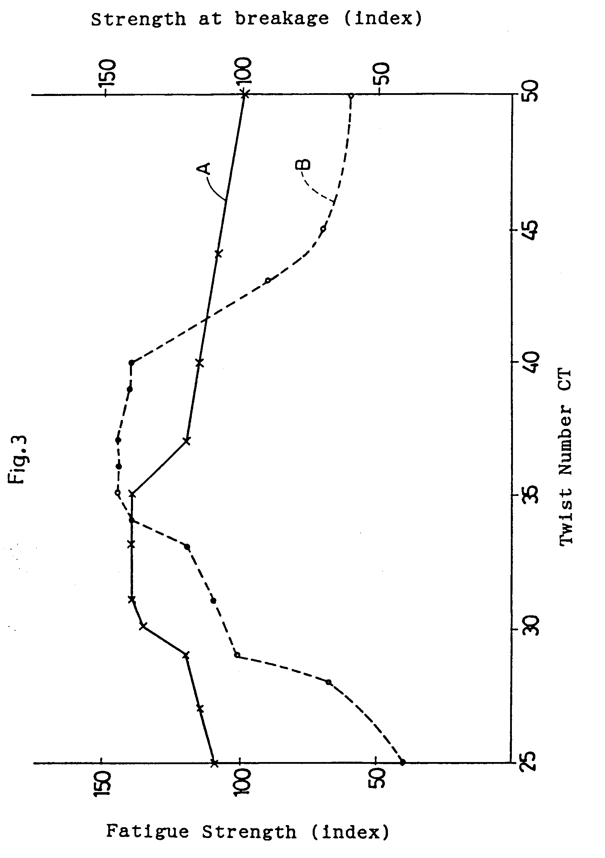

The inventor tested the relation between the initial modulus of elasticity, that is, the twist number CT of cord and the fatigue strength, and between the twist number CT and the strength at breakage. As a result, the mutual relation between both was confirmed as shown in Fig. 3. He found that the strength A at breakage (shown by a solid line in the figure) is maximum in the range of twist number CT from 30 to 35, and the fatigue strength B (shown by a broken line) is maximum in the range of twist number CT from 35 to 40.

On the other hand, the belt layer 7, in order to resist the large shock in the central region M, requires high strength at breakage while for the shoulder regions, due to the bank angles, good resistance to compressive fatigue is required.

Accordingly, as seen in the results in Fig.3, the twist number CT of the belt cord in the central region M can be selected from the range from 30 to 35 so that the initial modulus of elasticity of said belt cord can be set in the range from 2800 kg/mm$^2$ to 4100 kg/mm$^2$. Also the twist number CT of the belt cord in the shoulder region S is selected from the range from 35 to 40 so that the initial modulus of elasticity can be set in the range from 2200 kg/mm$^2$ to 2800 kg/mm$^2$. Accordingly, the initial modulus of elasticity of the belt cord is set to be larger in the central region than in the shoulder region.

To make the initial modulus of elasticity large in the central region M. it is possible, by the way, that the sectional area of the belt cord in the central region M is made to be larger than that of the belt cord in the shoulder region S.

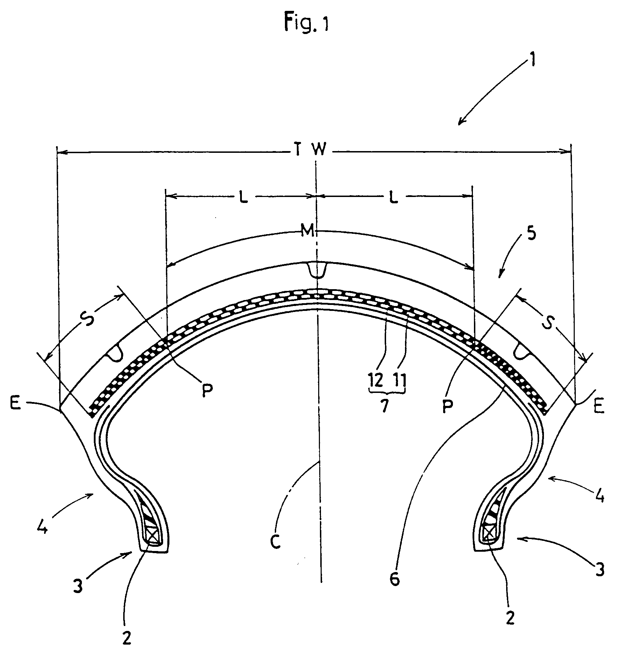

Test tyres having a size of 160/60R17 were produced according to the specification shown in Fig.1. and Table 2, and the high speed durability and the strength of the tyres were evaluated at an internal pressure of 2.9 kgf/cm$^2$ and 260kg load. In the table 2, tyres of the present invention are shown as example 1 to 3, prior art tyres are shown as comparison 1 to 5, and the tyres excluding the structure of the invention are shown as comparison 6 to 9.

1. High Speed durability test:-

The high speed durability test was performed on a drum tester, starting from a speed of 80 km/h. After 2 hours running, the speed was stepped up by 10km/h, then again after each two hours of running. The total running distance when the tyre was destroyed was taken as the durability index by using 100 as the measured value for the comparison 9, the higher index is better, over 120 index is the passing level.

2. Tyre Strength test:-

The test was carried out according to JIS K 6366, the results were expressed as indexes by using 100 as the measured value for the comparison 9, the higher index is better, over 115 index is the passing level.

As previously described, the motor cycle tyre according to the present invention is provided with a carcass and a belt layer each made from aromatic polyamide fibre cords. Further, the initial modulus of elasticity of the belt cord is set to be larger in the central region than that in the shoulder region, so that the central region is improved in impact resistance, and the shoulder region is increased in resistance to compressive fatigue so as to restrain the growth of the outer diameter of the tyre, resulting in preventing heat beat generation, so that the high speed durability is improved.

Tabl 1 (a)

| | example 1 | example 2 | example 3 | comparison 1 | comparison 2 | comparison 3 | comparison 4 | comparison 5 |
|---|---|---|---|---|---|---|---|---|
| carcass<br><br>cord material | aromatic<br>polyamide | aromatic<br>polyamide | aromatic<br>polyamide | nylon | nylon | polyestel | polyestel | polyestel |
| cord construction<br>twist number CT(per10cm)<br>cord angle (deg.) | 1500d/2<br>35×35<br>90~86 | 1500d/2<br>35×35<br>90~86 | 1500d/2<br>40×40<br>90~86 | 1260d/2<br>38.2×38.2<br>90~86 | 1260d/2<br>38.2×38.2<br>90~86 | 1000d/2<br>48×48<br>90~86 | 1000d/2<br>48×48<br>90~86 | 1000d/2<br>48×48<br>90~86 |
| belt layer<br><br>cord material<br><br>cord construction<br>number of plies<br>cord angle (deg.) | aromatic<br>polyamide<br>1500d/2<br>2<br>~0°~ | aromatic<br>polyamide<br>1500d/2<br>2<br>~0°~ | aromatic<br>polyamide<br>1500d/2<br>2<br>~0°~ | nylon<br><br>1260d/2<br>2<br>16 | aromatic<br>polyamide<br>1500d/2<br>2<br>16 | nylon<br><br>1260d/2<br>2<br>16 | nylon<br><br>1260d/2<br>2<br>~0°~ | aromatic<br>polyamide<br>1500d/2<br>2<br>~0°~ |
| twist number CT(per10cm) in<br>the central region(M)<br><br>type of the belt layer | 30×30<br><br>spiral winding | 35×35<br><br>spiral winding | 33×33<br><br>spiral winding | 38.2×38.2<br><br>cut-end ply | 55×55<br><br>cut-end ply | 38.2×38.2<br><br>cut-end ply | 38.2×38.2<br><br>cut-end ply | 55×55<br><br>spiral winding |
| twist number CT(per10cm) in<br>the shoulder region (S)<br><br>type of the belt layer | 35×35<br><br>spiral winding | 40×40<br><br>spiral winding | 35×35<br><br>spiral winding | same as the<br>central<br>region | same as the<br>central<br>region | same as the<br>central<br>region | same as the<br>central<br>region | same as the<br>central region |
| band layer | ——— | ——— | full-band<br>nylon<br>~0°~ | edge-band<br>nylon<br>~0°~ | full-band<br>nylon<br>~0°~ | ——— | ——— | ——— |
| high speed durability(index) | 145 | 150 | 140 | 95 | 95 | 100 | 95 | 100 |
| tyre strength(index) | 125 | 120 | 115 | 200 | 150 | 210 | 205 | 90 |

EP 0 422 881 B1

Table 1 (b)

| | comparison 6 | comparison 7 | comparison 8 | comparison 9 |
|---|---|---|---|---|
| | aromatic polyamide | aromatic polyamide | aromatic polyamide | aromatic polyamide |
| | 1500d/2 30×30 90~86 | 1500d/2 43×43 90~86 | 1500d/2 43×43 90~86 | 1500d/2 43×43 90~86 |
| | aromatic polyamide 1500d/2 2 ~0°~ | aromatic polyamide 1500d/2 2 ~0°~ | aromatic polyamide 1500d/2 2 ~0°~ | aromatic polyamide 1500d/2 2 ~0°~ |
| | 42×42 spirall winding | 40×40 cut-end ply | 28×28 spirall winding | 50×50 spirall winding |
| | 42×42 spiral winding | 33×33 spiral winding | 42×42 spiral winding | 30×30 spiral winding |
| | — | — | — | — |
| | 100 | 105 | 70 | 100 |
| | 112 | 115 | 120 | 100 |

## Claims

1. A tyre for motor cycles comprising a carcass (6) comprising at least one carcass ply extending from a tread (5) through sidewalls (4) and folded at each edge around a bead core (2) of a bead region (3) and a belt layer (7) comprising at least one belt ply (11,12) arranged radially outside the carcass (6), the carcass ply (6) containing carcass cords of aromatic polyamide fibre laid at an angle of 60° to 90° with respect to the equator (C) of the tyre, and the belt ply (11,12) comprising belt cords of aromatic polyamide fibre spirally wound substantially parallel to the equator (C) of the tyre, characterised in that the belt layer has in its central region (M), which is positioned between border points (P) each spaced apart in the axial direction by a distance of 0.25 times to 0.35 times the tread width (TW) from the equator (C), belt cords having an initial modulus of elasticity larger than that of the belt cords in the shoulder regions (S), which are positioned axially outside said border points (P) and the belt cord in the central region (M) has a twist number of 30x30T/10cm to 35x35/10cm and the belt cord in said shoulder region (S) has a twist number of 35x35T/10cm to 40x40T/10cm.

## Patentansprüche

1. Ein Reifen für Motorräder mit einer Karkasse (6), zu der mindestens eine Karkasseneinlage gehört, die sich von einer Lauffläche (5) durch Seitenwandungen (4) erstreckt und an jeder Kante um einen Wulstkern (2) eines Wulstbereiches (3) gefaltet ist, und einer Gürtelschicht (7), die mindestens eine Gürteleinlage (11, 12) aufweist, die radial außerhalb der Karkasse (6) angeordnet ist, wobei die Karkasseneinlage (6) Karkassenkorde aus aromatischen Polyamidfasern enthält, die unter einem Winkel von 60° bis 90° gegenüber dem Äquator (C) des Reifens gelegt sind, und die Gürteleinlage (11, 12) Korde aus aromatischen Polyamidfasern besitzt, die spiralförmig im wesentlichen parallel zu dem

6

Äquator (C) des Reifens gewickelt sind,
dadurch **gekennzeichnet,**
daß die Gürtelschicht in ihrem Mittelbereich (M), der zwischen Abschlußpunkten (P) positioniert ist, die jeweils in der Axialrichtung um eine Strecke, die das 0,25-fache bis 0,35-fache der Laufflächenbreite (TW) beträgt, von dem Äquator (C) beabstandet sind, Gürtelkorde aufweist, die einen anfänglichen Elastizitätsmodul haben, der größer als der der Gürtelkorde in den Schulterbereichen (S) ist, die axial außerhalb der Abschlußpunkte (P) positioniert sind, und der Gürtelkord in dem Mittelbereich (M) eine Verdrillungszahl von 30 x 30 T/10 cm bis 35 x 35/10 cm hat und der Gürtelbereich in dem Schulterbereich (S) eine Verdrillungszahl von 35 x 35 T/10 cm bis 40 x 40 T/10 cm besitzt.

**Revendications**

1. Pneumatique pour motocyclette, comprenant une carcasse (6) qui comporte au moins une couche de carcasse partant d'une bande de roulement (5) et passant dans les parois latérales (4), puis étant pliée à chaque bord autour d'une tringle (2), une région (3) de talon, et une couche (7) de ceinture qui comporte au moins une nappe (11, 12) de ceinture disposée radialement à l'extérieur de la carcasse (6), la nappe de carcasse (6) contenant des câblés de carcasse formés de fibres de polyamide aromatique disposés avec un angle compris entre 60 et 90° par rapport à l'équateur (C) du pneumatique, la nappe de ceinture (11, 12) comprenant des câblés de ceinture formés de fibres de polyamide aromatique enroulés en spirale en direction pratiquement parallèle à l'équateur (C) du pneumatique, caractérisé en ce que la couche de ceinture comporte, dans sa région centrale (M) qui est placée entre des points de bordure (P) qui sont séparés chacun, en direction axiale, de l'équateur (C) par une distance comprise entre 0,25 et 0,35 fois la largeur (TW) de la bande de roulement, des câblés de ceinture dont le module initial d'élasticité est supérieur à celui des câblés de ceinture présents dans les régions des épaulements (S) qui sont disposées axialement à l'extérieur des points de bordure (P), et le câblé de ceinture de la région centrale (M) a un nombre de torsions compris entre 30 x 30 tr/10 cm et 35 x 35 tr/10 cm, et le câblé de ceinture compris dans les régions d'épaulement (S) a un nombre de torsions compris entre 35 x 35 tr/10 cm et 40 x 40 tr/10 cm.

Fig. 1

## Fig.2

Fig.3

Fatigue Strength (Index)

Strength at breakage (Index)

Twist Number CT

EP 0 422 881 B1